(19) Europäisches Patentamt / European Patent Office / Office européen des brevets

(11) **EP 3 294 573 B1**

(12) # FASCICULE DE BREVET EUROPEEN


(45) Date de publication et mention de la délivrance du brevet:
**31.07.2019 Bulletin 2019/31**

(21) Numéro de dépôt: **16720823.0**

(22) Date de dépôt: **04.05.2016**

(51) Int Cl.:
***B60C 1/00*** *(2006.01)* ***C08L 7/00*** *(2006.01)*
***C08J 3/22*** *(2006.01)*

(86) Numéro de dépôt international:
**PCT/EP2016/059953**

(87) Numéro de publication internationale:
**WO 2016/180693 (17.11.2016 Gazette 2016/46)**


(54) **COMPOSITION DE CAOUTCHOUC**

KAUTSCHUKZUSAMMENSETZUNG

RUBBER COMPOSITION


(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.05.2015 FR 1554196**

(43) Date de publication de la demande:
**21.03.2018 Bulletin 2018/12**



(73) Titulaire: **Compagnie Générale des Etablissements Michelin**
**63000 Clermont-Ferrand (FR)**

(72) Inventeurs:
- **BELIN, Cecile**
**63040 Clermont-Ferrand Cedex 9 (FR)**
- **GONCALVES, Olivier**
**63040 Clermont-Ferrand Cedex 9 (FR)**

(74) Mandataire: **Gandon-Pain, Sylvie**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**



(56) Documents cités:
**EP-A1- 0 877 047** **WO-A1-2012/080109**
**WO-A1-2012/080111** **WO-A1-2013/087657**
**FR-A1- 2 740 778**

- **OTTO S: "New Refernce Value for the Description of Filler Dispersion with the Dispergrader 1000 NT", KAUTSCHUK GUMMI KUNSTSTOFFE,, vol. 58, no. 7-8, 1 janvier 2005 (2005-01-01), pages 390-393, XP009189116,**



Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).


EP 3 294 573 B1

Printed by Jouve, 75001 PARIS (FR)

## Description

L'invention concerne une composition de caoutchouc à base de caoutchouc naturel et d'une charge renforçante comprenant un mélange de noir de carbone très fin et de silice, notamment pour bande de roulement pour pneumatique, et plus particulièrement pour pneumatique destiné à équiper des véhicules portant de lourdes charges et roulant sur des sols hors la route.

Les pneumatiques destinés à équiper des véhicules portant de lourdes charges et roulant sur des sols hors la route sont ceux par exemple qui équipent les engins évoluant dans les mines, les chantiers de construction. Les bandes de roulement de tels pneumatiques sont particulièrement sensibles aux agressions en raison de la nature non bitumineuse du sol de roulage. Les compositions de caoutchouc présentant de bonnes propriétés rupture sont tout à fait adaptées pour constituer les bandes de roulement de tels pneumatiques. Les compositions de caoutchouc appropriées pour l'usage mentionné sont par exemple celles à base de caoutchouc naturel et d'une charge renforçante comprenant un mélange de noir de carbone très fin et de silice.

Par ailleurs, il est préférable que les compositions de caoutchouc renforcées par un mélange de noir de carbone très fin et de silice soient les moins hystérétiques possibles en vue de minimiser l'échauffement du pneumatique, ce qui est particulièrement vrai pour les pneumatiques portant de lourdes charges et roulant sur des sols hors la route. En effet, le poids porté par le pneumatique et la nature agressive du sol de roulage rendent le pneumatique sensible aux élévations de température. La propriété connue d'un élastomère fonctionnel silanol ou organooxysilane, notamment alcoxysilane, à réduire l'hystérèse d'une composition de caoutchouc renforcée par une silice amène à envisager l'utilisation d'élastomères fonctionnels silanol ou organooxysilane dans des compositions de caoutchouc à base de caoutchouc naturel et d'une charge renforçante comprenant un mélange de noir de carbone très fin et la silice.

Or il a été constaté que l'utilisation de ces élastomères fonctionnels dans des compositions de caoutchouc à base de caoutchouc naturel et d'une charge renforçante comprenant un noir de carbone très fin et une silice, s'accompagnait d'une diminution de leurs propriétés rupture.

Les Demanderesses poursuivant leurs efforts d'améliorer le compromis entre les propriétés de rupture et d'hystérèse des compositions de caoutchouc à base de caoutchouc naturel et d'une charge renforçante comprenant du noir de carbone et de la silice ont trouvé que l'adjonction d'un élastomère fonctionnel silanol ou organooxysilane à une composition de caoutchouc dans laquelle le noir de carbone présente un niveau de dispersion élevée, permet d'atteindre un compromis amélioré entre les propriétés rupture et d'hystérèse de la composition de caoutchouc.

Ainsi un premier objet de l'invention concerne une composition de caoutchouc à base au moins d'une matrice élastomère comprenant du caoutchouc naturel et un élastomère diénique fonctionnel, d'une charge renforçante comprenant un noir de carbone et une silice, d'un agent de couplage pour lier la silice à la matrice élastomère et d'un système de réticulation,

- l'élastomère diénique fonctionnel étant un élastomère diénique portant une fonction SiOR, R étant l'hydrogène ou un groupe carboné,
- le noir de carbone ayant une surface spécifique BET supérieure à 130 $m^2/g$,
- la dispersion du noir de carbone dans la matrice élastomère ayant une note Z supérieure à 80.

Un autre objet de l'invention concerne un procédé pour préparer la composition de caoutchouc conforme à l'invention, lequel procédé comprend les étapes suivantes :

a. On prépare un premier mélange maître comprenant le caoutchouc naturel et le noir de carbone dispersé avec une note Z supérieure ou égale à 90,
b. On ajoute la silice et l'élastomère diénique fonctionnel, éventuellement sous la forme d'un deuxième mélange maître, au premier mélange maître
c. On mélange l'ensemble par un malaxage thermomécanique.

L'invention concerne également une bande de roulement pour pneumatique qui comprend une composition de caoutchouc conforme à l'invention, ainsi qu'un pneumatique qui comprend une composition de caoutchouc conforme à l'invention, préférentiellement dans sa bande de roulement.

### I. DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs

supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Par l'expression composition "à base de", il faut entendre dans la présente description une composition comportant le mélange et/ou le produit de réaction in situ des différents constituants utilisés, certains de ces constituants de base (par exemple l'élastomère, la charge ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée à la fabrication de pneumatique.

On entend par matrice élastomère l'ensemble des élastomères de la composition de caoutchouc.

On entend par groupe carboné un radical qui contient du carbone, tel qu'un groupe hydrocarboné ou un groupe contenant du carbone, de l'hydrogène et au moins un hétéroatome.

On entend dans ce qui suit par « mélange maître » (couramment désigné par son nom anglais « masterbatch »): un composite à base d'élastomère dans lequel a été introduite une charge et éventuellement d'autres additifs.

Une caractéristique essentielle de la composition de caoutchouc selon l'invention est de comprendre un élastomère diénique fonctionnel en plus du caoutchouc naturel.

Par élastomère (ou indistinctement "caoutchouc", les deux termes étant considérés comme synonymes) diénique, doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Bien qu'elle s'applique à tout type d'élastomère diénique, l'homme du métier du pneumatique comprendra que l'invention est de préférence mise en oeuvre avec des élastomères diéniques essentiellement insaturés.

Ces définitions étant données, on entend notamment par élastomère diénique susceptible d'être mis en oeuvre dans les compositions conformes à l'invention :

(a) - tout homopolymère obtenu par polymérisation d'un monomère diène conjugué, ayant de préférence de 4 à 12 atomes de carbone ;

(b) - tout copolymère obtenu par copolymérisation d'un ou plusieurs diènes conjugués entre eux ou avec un ou plusieurs composés vinyle aromatique ayant de préférence de 8 à 20 atomes de carbone.

A titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyletoluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques.

Plus préférentiellement, l'élastomère diénique est choisi dans le groupe constitué par les polybutadiènes (BR) (notamment ceux ayant un taux de liaisons cis-1,4 supérieur à 90%), les polyisoprènes de synthèse (IR), les copolymères de butadiène, en particulier les copolymères de butadiène-styrène (SBR), et les mélanges de ces élastomères.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%.

Avantageusement, l'élastomère diénique est un copolymère de butadiène et de styrène présentant de préférence une température de transition vitreuse allant de -65°C à -20°C.

L'élastomère diénique utile aux besoins de l'invention, dit élastomère diénique fonctionnel, est un élastomère

diénique qui porte une (c'est-à-dire une ou plusieurs) fonction SiOR, R étant l'hydrogène ou un groupe carboné.

De façon générale, une fonction portée par un élastomère peut être située sur la chaîne élastomère selon l'une des trois configurations possibles : le long de la chaîne élastomère comme groupe pendant en dehors des extrémités de la chaîne élastomère, à une extrémité de la chaîne élastomère ou bien à l'intérieur même (c'est-à-dire en dehors des extrémités) de la chaîne élastomère, c'est-à-dire elle est le point de jonction d'au moins deux branches de l'élastomère. Ce dernier cas se présente notamment dans le cas où l'élastomère est fonctionnalisé par l'utilisation d'un agent de couplage ou d'étoilage qui apporte la fonction en question.

En particulier, la fonction SiOR peut se situer le long de la chaîne élastomère comme groupe pendant, à une extrémité de la chaîne élastomère ou bien à l'intérieur même de la chaîne élastomère. Dans le cas où il y a plusieurs fonctions SiOR portées par l'élastomère, elles peuvent occuper l'une ou l'autre des configurations ci-dessus.

L'élastomère diénique fonctionnel peut être un polymère linéaire ou étoilé, voire branché. Si c'est un polymère linéaire, il peut être couplé ou non. Cet élastomère peut avoir une distribution moléculaire monomodale, bimodale ou polymodale.

Selon un autre mode de réalisation préférentiel de l'invention, l'élastomère diénique fonctionnel est majoritairement sous une forme linéaire, c'est-à-dire que s'il comporte des chaînes étoilées ou branchées, celles-ci représentent une fraction pondérale minoritaire dans cet élastomère.

Selon un mode de réalisation particulièrement préférentiel de l'invention, l'élastomère diénique est porteur d'une (c'est-à-dire une ou plusieurs) fonction dite « silanol » de formule SiOH (R est l'hydrogène), de préférence une seule fonction silanol.

Des élastomères diéniques correspondant à une telle définition sont bien connus, ils ont par exemple été décrits dans les documents EP 0 778 311 B1, WO 2008/141702, WO 2006/050486, EP 0877 047 B1, ou EP 1400 559 B1. La fonction silanol SiOH est préférentiellement située en extrémité de la chaîne élastomère, en particulier sous la forme d'un groupement diméthylsilanol $-SiMe_2SiOH$.

Selon un autre mode de réalisation de l'invention, l'élastomère diénique fonctionnel est porteur d'au moins une (c'est-à-dire une ou plusieurs) fonction de formule SiOR dans laquelle R est un radical hydrocarboné en $C_1$ ou $C_6$ (c'est-à-dire contenant de 1 à 6 atomes de carbone), de préférence méthyle ou éthyle.

Des élastomères diéniques correspondant à une telle définition sont également bien connus, ils ont par exemple été décrits dans les documents JP 63-215701, JP 62-227908, US 5 409 969 ou WO 2006/050486.

L'élastomère diénique fonctionnel, peut porter une autre (c'est-à-dire une ou plusieurs) fonction qui est différente de la fonction SiOR. Cette autre fonction peut être choisie dans le groupe constitué par les fonctions époxy et amine, l'amine pouvant être une amine primaire, secondaire ou tertiaire.

La fonction amine peut se situer sur la même extrémité (ou les mêmes extrémités) de la chaîne élastomère que la fonction SiOR. Les élastomères ayant une fonction SiOR et une fonction amine sur la même extrémité de chaîne élastomère ont été décrits par exemple dans les brevets ou demandes de brevet EP 1457 501 B1, WO 2006/076629, EP 0 341 496 B1 ou WO 2009/133068 ou encore dans WO 2004/111094.

La fonction amine peut être présente sur une extrémité de la chaîne élastomère qui ne porte pas la fonction SiOR. Une telle configuration peut être réalisée par exemple par l'emploi d'un amorceur portant une fonction amine, en particulier par l'utilisation d'un amorceur qui est un amidure de lithium, tel que l'amidure de lithium de la pyrrolidine ou de l'hexaméthylèneimine, ou un organolithien portant une fonction amine tel que le diméthylaminopropyllithium et le 3-pyrrolidinopropyllithium. De tels amorceurs ont été décrits par exemple dans les brevets EP 0 590 490 B1 et EP 0 626 278 B1. De tels élastomères portant une fonction SiOR et une fonction amine à leurs extrémités de chaîne différentes ont par exemple été décrits dans les brevets EP 0 778 311 B1 et US 5 508 333.

Des élastomères portant à la fois une fonction SiOR et une fonction époxy ont par exemple été décrits dans les brevets EP 0 890 607 B1 et EP 0 692 492 B1. Des élastomères portant à la fois une fonction SiOR et une fonction étain ont par exemple été décrits dans le brevet EP 1 000 970 B1.

Il est entendu que l'élastomère diénique fonctionnel peut être constitué par un mélange d'élastomères qui se différencient des uns des autres par la nature chimique de la fonction SiOR, par sa position sur la chaîne élastomère, par la présence d'une fonction supplémentaire autre que SiOR, par leur microstructure ou encore par leur macrostructure.

Selon un autre mode de réalisation préférentiel de l'invention, le taux d'élastomère diénique fonctionnel dans la composition de caoutchouc est compris dans un domaine allant 15 à 45 pce, celui de caoutchouc naturel de 55 à 85 pce.

La composition de caoutchouc peut comprendre un élastomère diénique supplémentaire. Cet élastomère diénique supplémentaire, optionnel, est différent de l'élastomère diénique fonctionnel dans la mesure où il ne porte pas de fonction SiOR. Néanmoins cet élastomère diénique supplémentaire peut avoir une microstructure ou une macrostructure qui peuvent être identiques à ou différentes de celles de l'élastomère diénique fonctionnel. Il est alors utilisé dans une proportion allant 0 à 25pce.

Lorsque l'élastomère diénique fonctionnel porte une fonction silanol en extrémité de chaîne, notamment une seule fonction silanol, la composition de caoutchouc peut comprendre un élastomère supplémentaire qui est couplé ou étoilé à l'étain. Par définition, cet élastomère supplémentaire est différent de l'élastomère diénique fonctionnel dans la

mesure où il ne porte pas de fonction SiOR. Néanmoins il peut avoir une microstructure qui peut être identique à ou différente de celles de l'élastomère diénique fonctionnel. Il est utilisé par exemple dans une proportion allant de 0 à 25pce.

On entend par charge renforçante des particules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

La charge renforçante utile aux besoins de l'invention comprend un noir de carbone de surface spécifique BET supérieure à 130 $m^2/g$. La surface spécifique BET des noirs de carbone est mesurée selon la norme D6556-10 [méthode multipoints (au minimum 5 points) - gaz : azote - domaine de pression relative P/P0 : 0.01 à 0.5].

On peut citer comme noir de carbone les noirs renforçants de la série 100 grade ASTM, en particulier les noirs N115, N134, des noirs plus fins tels que le CRX1507.

Le noir de carbone peut être utilisé à l'état isolé, tel que disponible commercialement, ou sous tout autre forme, par exemple comme support de certains des additifs de caoutchouterie utilisés.

La silice utilisée peut être toute silice connue de l'homme du métier, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique.

La silice utilisée peut être une silice précipitée ou pyrogénée présentant une surface BET ainsi qu'une surface spécifique CTAB toutes deux inférieures à 450 $m^2/g$, de préférence de 30 à 400 $m^2/g$, notamment entre 60 et 300 $m^2/g$. On peut citer comme exemple de silice utile pour les besoins de l'invention la silice « Ultrasil VN3 » commercialisée par la société Evonik. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.

Pour optimiser davantage les propriétés d'hystérèse tout en maintenant un compromis amélioré entre les propriétés rupture et l'hystérèse, la silice présente une surface BET allant de préférence de 80 à 200 $m^2/g$, de manière préférentielle de 100 à 180 $m^2/g$. Ces plages préférentielles de surface BET s'appliquent à l'un quelconque des modes de réalisation de l'invention.

Dans le présent exposé, en ce qui concerne la silice, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1 heure à 160°C - domaine de pression relative *p/po* : 0.05 à 0.17). La surface spécifique CTAB est la surface externe déterminée selon la norme française NF T 45-007 de novembre 1987 (méthode B).

L'état physique sous lequel se présente la silice est indifférent, que ce soit sous forme de poudre, de microperles, de granulés, ou encore de billes. Bien entendu on entend également par silice des mélanges de différentes silices.

Pour rendre la silice renforçante dans une composition de caoutchouc diénique, il est connu d'utiliser un agent de couplage pour coupler la silice à l'élastomère diénique. L'agent de couplage, le plus souvent un silane, (ou agent de liaison) au moins bifonctionnel permet d'assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

Comme agent de couplage sont utilisés notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (V)

$$Z\text{-}A\text{-}S_x\text{-}A\text{-}Z \qquad (V)$$

dans laquelle :

- x est un entier de 2 à 8 (de préférence de 2 à 5) ;
- les symboles A, identiques ou différents, représentent un radical hydrocarboné divalent (de préférence un groupement alkylène en $C_1$-$C_{18}$ ou un groupement arylène en $C_6$-$C_{12}$, plus particulièrement un alkylène en $C_1$-$C_{10}$, notamment en $C_1$-$C_4$, en particulier le propylène) ;
- les symboles Z, identiques ou différents, répondent à l'une des trois formules ci-après:

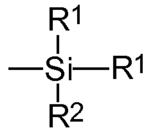 ; 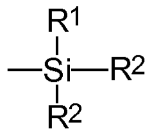 ; 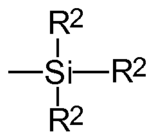 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$.

A titre d'agent de couplage autre qu'alkoxysilane polysulfuré, on citera notamment des POSS (polyorganosiloxanes) bifonctionnels ou encore des polysulfures d'hydroxysilane tels que décrits dans les demandes de brevets WO 02/30939 (ou US 6,774,255), WO 02/31041 (ou US 2004/051210) ou encore des silanes ou POSS porteurs de groupements fonctionnels azo-dicarbonyle, tels que décrits par exemple dans les demandes de brevets WO 2006/125532, WO 2006/125533, WO 2006/125534.

Selon l'un quelconque des modes de réalisation de l'invention, l'agent de couplage est de préférence un silane polysulfuré.

Le taux de noir de carbone est de préférence de 5 à 25 pce, de manière plus préférentielle de 15 à 25 pce. Le taux de silice utilisée est de préférence de 10 à 30 pce, de manière plus préférentielle 15 à 25 pce. Le taux de charge renforçante est de préférence de 30 à 55 pce, de manière plus préférentielle 35 à 50pce. Ces plages préférentielles de noir de carbone, de silice et de charge renforçante peuvent s'appliquer à l'un quelconque des modes de réalisation de l'invention. Elles sont particulièrement adaptées lorsque la composition de caoutchouc est destinée à être utilisée dans une bande de roulement pour un pneumatique destiné à équiper des véhicules portant de lourdes charges et roulant sur des sols hors la route.

Typiquement le taux d'agent de couplage représente de 0,5% à 15% en poids par rapport à la quantité de charge inorganique. Son taux est préférentiellement compris entre 5 à 15% massique, plus préférentiellement compris dans un domaine allant de 5 et 10% massique. Ce taux est aisément ajusté par l'homme du métier selon le taux de silice utilisé dans la composition.

Le système de réticulation peut être à base de soufre, de donneurs de soufre, de peroxyde, de bismaléimides ou de leurs mélanges.

Selon l'un quelconque des modes de réalisation de l'invention, le système de réticulation est préférentiellement un système de vulcanisation, c'est-à-dire un système à base de soufre (ou d'un agent donneur de soufre) et d'un accélérateur primaire de vulcanisation. A ce système de vulcanisation de base peuvent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques tels qu'une guanidine N,N'-disubstituée (en particulier diphénylguanidine), ou encore des retardateurs de vulcanisation connus.

Lorsque le soufre est utilisé, il est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

La composition de caoutchouc conforme à l'invention peut comporter également tout ou partie des additifs usuels habituellement utilisés dans les compositions de caoutchouc destinées à constituer des mélanges d'articles finis en caoutchouc tels que des pneumatiques, comme par exemple des pigments, des agents de protection tels que cires anti-ozone, anti-ozonants chimiques, anti-oxydants, des agents anti-fatigue.

Il peut être utilisée dans la composition de caoutchouc définie selon l'un quelconque des modes de réalisations de l'invention, des agents d'aide à la mise en oeuvre susceptibles de manière connue, grâce à une amélioration de la dispersion de la silice dans la matrice élastomère et à un abaissement de la viscosité des compositions, d'améliorer leur faculté de mise en oeuvre à l'état cru. Ces agents, également connus sous le nom d'agents de recouvrement de la silice, sont par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des $\alpha,\omega$-dihydroxy-polyorganosiloxanes (notamment des $\alpha,\omega$-dihydroxy-polydiméthylsiloxanes), des acides gras comme par exemple l'acide stéarique, des dérivés de la guanidine, en particulier une guanidine N,N'-disubstituée, comme la N,N'-diphénylguanidine (DPG), également connue comme accélérateur secondaire de vulcanisation. L'un quelconque des agents de recouvrement de la silice mentionnés ci-dessus peut être utilisé, préférentiellement à un taux allant de 0 à 5pce, plus préférentiellement entre 0 et 5 pce.

Une caractéristique essentielle de la composition de caoutchouc conforme à l'invention est le niveau de dispersion du noir de carbone. La dispersion du noir de carbone dans la matrice élastomère présente une note Z supérieure à 80. La note Z qui caractérise la dispersion du noir de carbone dans la matrice élastomère est mesurée, après réticulation de la matrice élastomère, selon la méthode décrite par S. Otto et Al dans Kautschuk Gummi Kunststoffe, 58 Jahrgang, NR 7-8/2005, en accord avec la norme ISO 11345.

D'une manière connue, la dispersion de charge dans une matrice élastomère peut être représentée par la note Z, qui est mesurée, après réticulation, selon la méthode décrite par S. Otto et Al dans Kautschuk Gummi Kunststoffe, 58 Jahrgang, NR 7-8/2005, en accord avec la norme ISO 11345.

Le calcul de la note Z est basé sur le pourcentage de surface dans laquelle la charge n'est pas dispersée (« % surface non dispersée »), telle que mesurée par l'appareil « disperGRADER+ » fourni avec son mode opératoire et son logiciel d'exploitation « disperDATA » par la société Dynisco selon l'équation :

$$Z = 100 - (\%\ \text{surface non dispersée}) / 0.35$$

Le pourcentage de surface non dispersée est, quant à lui, mesuré grâce à une caméra observant la surface de l'échantillon sous une lumière incidente à 30°. Les points clairs sont associés à de la charge et à des agglomérats, tandis que les points foncés sont associés à la matrice élastomère ; un traitement numérique transforme l'image en une image noir et blanche, et permet la détermination du pourcentage de surface non dispersée, telle que décrite par S.Otto dans le document précité.

Plus la note Z est haute, meilleure est la dispersion de la charge dans la matrice élastomère (une note Z de 100 correspondant à une dispersion parfaite et une note Z de 0 à une dispersion médiocre). On considèrera qu'une note Z supérieure à 80 correspond à une surface présentant une très bonne dispersion de la charge dans la matrice élastomère.

La composition de caoutchouc conforme à l'invention peut être préparée selon le procédé décrit ci-après, autre objet de l'invention.

Le procédé a pour caractéristique essentielle de comprendre les étapes suivantes :

a. On prépare un premier mélange maître comprenant le caoutchouc naturel et le noir de carbone dispersé avec une note Z supérieure ou égale à 90,
b. On ajoute la silice et l'élastomère diénique fonctionnel au premier mélange maître
c. On mélange l'ensemble par un malaxage thermomécanique.

Le premier mélange maître est de préférence préparé par mélangeage en phase liquide à partir d'un latex de caoutchouc naturel et d'une dispersion aqueuse de noir de carbone, couramment appelée slurry. De manière plus préférentielle, pour préparer le premier mélange maître, seront suivies les étapes de procédé décrites dans le document US 6,048,923, qui consiste notamment à alimenter avec un premier flux continu d'un latex de caoutchouc naturel une

zone de mélange d'un réacteur de coagulation définissant une zone allongée de coagulation s'étendant entre la zone de mélange et une sortie, à alimenter la zone de mélange du réacteur de coagulation avec un deuxième flux continu d'un fluide comprenant le noir de carbone sous pression pour former un mélange avec le latex de caoutchouc naturel en mélangeant le premier flux et le deuxième flux dans la zone de mélange de manière suffisamment énergique pour coaguler le latex de caoutchouc naturel avec le noir de carbone avant la sortie, ledit mélange s'écoulant comme un flux continu vers la zone de sortie et ladite charge étant susceptible de coaguler le latex d'élastomère, à récupérer à la sortie du réacteur le coagulum obtenu précédemment sous forme d'un flux continu et le sécher afin de récupérer le mélange maître.

Le latex de caoutchouc naturel (NR) existe sous différentes formes comme le détaille le chapitre 3 « Latex concentrates : properties and composition », de K.F. Gaseley, A.D.T. Gordon et T.D. Pendle dans « Naturel Rubber Science and Technology », A.D. Roberts, Oxford University Press - 1988. En particulier plusieurs formes de latex de caoutchouc naturel sont commercialisés : les latex de caoutchouc naturel dits « de champ » (« field latex »), les latex de caoutchouc naturel dits « concentrés » (« concentrated natural rubber latex »), les latex epoxydés (« ENR »), les latex déprotéinisés ou encore les latex prévulcanisés. Le latex de caoutchouc naturel de champ est un latex dans lequel de l'ammoniac a été ajouté pour éviter une coagulation précoce et le latex de caoutchouc naturel concentré correspond à un latex de champ qui a subi un traitement correspondant à un lavage suivi d'une nouvelle concentration. Les différentes catégories de latex de caoutchouc naturel concentrés sont répertoriées notamment selon la norme ASTM D 1076-06. Parmi ces latex de caoutchouc naturel concentrés, on distingue notamment des latex de caoutchouc naturel concentrés de qualité dite: « HA » (high ammonia) et de qualité dite « LA » (low ammonia) ; on utilisera avantageusement pour l'invention des latex de caoutchouc naturel concentrés de qualité HA.

Selon un mode de réalisation particulier de l'invention, la silice et l'élastomère diénique fonctionnel sont ajoutés au premier mélange maître en se présentant également sous la forme d'un deuxième mélange maître qui aura été préalablement préparé. Ce deuxième mélange maître peut être préparé sous forme solide, en particulier par malaxage thermomécanique de l'élastomère diénique fonctionnel et de la silice, notamment jusqu'à atteindre une température maximale comprise entre 140°C et 180°C. Le deuxième mélange maître est mélangé au premier mélange maître par un malaxage thermomécanique.

Selon ce mode de réalisation particulier, le deuxième mélange maître contenant l'élastomère diénique fonctionnel et la silice comprend de préférence en outre l'agent de couplage, tel qu'un silane polysulfuré, et éventuellement un agent de recouvrement de la silice.

On notera en particulier que l'incorporation de l'élastomère diénique fonctionnel seul et la silice seule ou sous la forme d'un deuxième mélange maître peut être réalisée simultanément à l'introduction dans le mélangeur des autres constituants (notamment le premier mélange maître) mais également avantageusement que cette ou ces incorporations peut être décalées dans le temps de quelques dizaines de secondes à quelques minutes. Dans le cas de l'introduction de l'élastomère diénique fonctionnel seul et de la silice seule, décalée dans le temps de quelques dizaines de secondes à quelques minutes, la silice peut être introduite avant, après ou simultanément l'élastomère diénique fonctionnel.

La composition de caoutchouc peut être fabriquée dans des mélangeurs appropriés, en utilisant deux phases de préparation successives selon une procédure générale bien connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation. Au cours de la première phase « non-productive » sont ajoutés au premier mélange maître l'élastomère diénique fonctionnel et la silice en malaxant thermomécaniquement jusqu'à atteindre une température maximale comprise entre 130 et 200°C. La phase « non-productive » est suivie le plus souvent d'un refroidissement à une température inférieure à 100°C, avant d'entamer la seconde phase dans laquelle le système de réticulation est incorporé et l'ensemble est malaxé jusqu'à une température maximale inférieure à 120°C.

Selon un mode de réalisation de l'invention, le premier mélange maître, l'élastomère fonctionnel et la silice, le cas échéant sous la forme d'un deuxième mélange, ainsi que les autres ingrédients de la composition de caoutchouc à l'exception du système de réticulation, sont incorporés de manière intime, par malaxage, au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires (sous forme le cas échéant de mélanges maîtres comme on l'a précisé précédemment), les éventuels agents de recouvrement ou de mise en oeuvre complémentaires et autres additifs divers, à l'exception du système de réticulation. La durée totale du malaxage, dans cette phase non-productive, est de préférence comprise entre 1 et 15 min. Après refroidissement du mélange ainsi obtenu au cours de la première phase non-productive, on incorpore alors

le système de réticulation à basse température, généralement dans un mélangeur externe tel qu'un mélangeur à cylindres; le tout est alors mélangé (phase productive) pendant quelques minutes, par exemple entre 2 et 15 min.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique.

Ainsi selon un mode de réalisation particulier de l'invention, la composition de caoutchouc conforme à l'invention, pouvant être soit à l'état cru (avant vulcanisation), soit à l'état cuit (après vulcanisation), est dans un pneumatique, notamment dans une bande de roulement de pneumatique.

Les caractéristiques précitées de la présente invention, ainsi que d'autres, seront mieux comprises à la lecture de la description suivante de plusieurs exemples de réalisation de l'invention, donnés à titre illustratif et non limitatif.

## II. EXEMPLES DE REALISATION DE L'INVENTION

### II.1-Mesures et tests utilisés :

#### 11.1.1-Propriétés rupture :

Les essais permettent de déterminer les contraintes d'élasticité et les propriétés à la rupture ; ceux effectués sur les mélanges cuits sont réalisés conformément à la norme AFNOR-NF-T46-002 de septembre 1988.

On mesure à la température de 60°C ± 2°C, et dans les conditions normales d'hygrométrie (50 ± 5% d'humidité relative), selon la norme française NF T 40-101 (décembre 1979), les contraintes à la rupture (en MPa), les allongements à la rupture (en %), l'énergie à la rupture (Energie Rupture) étant le produit de la contrainte à la rupture et de l'allongement à la rupture.

#### 11.1.2-Propriétés dynamiques :

La propriété dynamique tan(δ)max est mesurée sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné, à la fréquence de 10Hz et à la température de 100°C selon la norme ASTM D 1349 - 99. On effectue un balayage en amplitude de déformation de 0,1 à 50% (cycle aller), puis de 50% à 0,1% (cycle retour). Le résultat exploité est le facteur de perte (tan δ). Pour le cycle retour, on indique la valeur maximale de tan δ observée (tan(δ)max), entre les valeurs à 0,1% et à 50% de déformation (effet Payne).

### II.2-Préparation des compositions de caoutchouc :

Ce paragraphe porte sur la préparation des compositions T1, T2, T3, T1-F, M2 et M3 pour illustrer l'invention, ainsi que sur la préparation des mélanges maîtres utilisés dans la préparation de ces mêmes compositions de caoutchouc T2, T3, M2 et M3.

Indépendamment de leur procédé de fabrication, la formulation de toutes les compositions de caoutchouc T1, T2, T3, T1-F, M2 et M3 est la suivante :

| | |
|---|---|
| NR : | 55 pce |
| SBR : | 45 pce |
| Noir de carbone : | 20 pce |
| Silice : | 25 pce |
| Silane : | 1.9 pce |
| DPG : | 0.3 pce |
| Antioxydant : | 2.5 pce |
| Cire antiozone : | 1 pce |
| Acide stéarique : | 2.5 pce |
| ZnO : | 2.7 pce |
| CBS | 1.4 pce |
| Soufre : | 1 pce. |

II.2.1-Préparation du mélange maître de caoutchouc naturel et de noir de carbone (MB-NR) :

Le mélange maître de caoutchouc naturel et de noir de carbone (MB-NR) utilisé dans les compositions T2, T3, M2 et M3 est réalisé en phase liquide selon le procédé décrit dans le brevet U.S. Patent No 6,048,923.

Ainsi on prépare selon le protocole détaillé dans le brevet précité, le mélange maître à partir de noir de carbone N134 commercialisé par la société Cabot Corporation, et de latex de caoutchouc naturel de champs (« field latex ») en provenance de Malaisie présentant un extrait sec de caoutchouc de 28% et un taux d'ammoniac de 0,3%.

On obtient ainsi le mélange maître MB-NR de caoutchouc naturel et de noir de carbone dans lequel le taux de noir de carbone est de 50 pce.

| Mélange maître | MB-NR |
|---|---|
| NR | 100 |
| N134 | 50 |

II.2.2-Préparation des mélanges maîtres d'élastomère diénique et de silice (MB-SBR1 et MB-SBR2) :

Les mélanges maîtres de SBR et de silice (MB-SBR) contiennent non seulement l'élastomère diénique et la silice, mais aussi le silane et la DPG, aux taux indiqués ci-après en pce. La silice et le silane sont les mêmes que ceux utilisés dans les autres compositions de caoutchouc T1, T3, T1-F et M3. La silice est une silice de BET de 120 $m^2/g$, l'agent de couplage est le silane TESPT « Si69 », l'accélérateur secondaire est la diphénylguanidine (DPG).

| Mélange maître | MB-SBR |
|---|---|
| SBR | 100 |
| Silice | 45 |
| Silane | 3.4 |
| DPG | 0.6 |

Les taux de silice, de silane et de DPG dans les mélanges maîtres MB-SBR sont ajustés de façon à ce que leur taux dans les compositions de caoutchouc T2 et M2 contenant le caoutchouc naturel, le noir de carbone, le mélange maître MB-SBR soient identiques aux autres compositions de caoutchouc T1, T3, T1-F et M3.

Les mélanges maîtres MB-SBR diffèrent entre eux par la présence ou non d'une fonction sur l'élastomère diénique SBR : l'élastomère diénique utilisé dans le mélange maître MB-SBR1 est un SBR non fonctionnel (SBR1), l'élastomère diénique utilisé dans le mélange maître MB-SBR2 est un SBR fonctionnel dont plus de 70% des chaînes portent une fonction silanol en extrémité de chaîne (SBR2). Le mélange maître MB-SBR1 est utilisé dans la composition T2, le mélange maître MB-SBR2 dans la composition M2.

Les mélanges maîtres MB-SBR sont préparés dans un mélangeur rempli à 70% et dont la température initiale de cuve est d'environ 90°C par l'incorporation dans l'élastomère diénique de la silice, du silane et de la DPG par un malaxage thermomécanique jusqu'à atteindre une température maximale de "tombée" comprise entre 140 et 180°C.

II.2.3-Préparation des compositions de caoutchouc T1, T2, T3, T1-F, M2 et M3 :

Les compositions de caoutchouc diffèrent par la présence ou non d'une fonction SiOR sur l'élastomère diénique SBR, par leur procédé de préparation qui implique ou non l'utilisation de mélange maître de caoutchouc naturel et de noir de carbone et de mélange maître de SBR et de silice.

II.2.3.1-Préparation des compositions de caoutchouc T1 et T1-F :

Les compositions de caoutchouc T1 et T1-F sont des compositions de caoutchouc préparées de façon traditionnelle, puisque leur préparation ne requiert pas la préparation de mélange maître de caoutchouc naturel et de noir de carbone. La composition T1-F diffère de T1 en ce que le SBR contenu dans T1-F est un SBR dont plus de 70% des chaînes portent une fonction silanol en extrémité de chaîne. Les teneurs en caoutchouc naturel et en SBR dans T1 et T1-F sont indiquées en pce ci-après :

| Composition | T1 | T1-F |
|---|---|---|
| NR (1) | 55 | 55 |
| SBR1 (2) | 45 | - |
| SBR2 (3) | - | 45 |
| (1) caoutchouc naturel ; (2) SBR avec 26% de styrène et 24% de motif 1,2 de la partie butadiénique ; (3) SBR avec 26% de motif styrène et 24% de motif 1,2 de la partie butadiénique, dont plus de 70% des chaînes portent une fonction silanol en extrémité de la chaîne élastomère. | | |

On introduit dans un mélangeur interne, rempli à 70% et dont la température initiale de cuve est d'environ 90°C, le caoutchouc naturel sous forme solide, le noir de carbone, le SBR, la silice, le silane, la DPG et les divers autres ingrédients à l'exception du système de vulcanisation. On conduit alors un travail thermomécanique (phase non-productive) en une étape (durée totale du malaxage égale à environ 5 min), jusqu'à atteindre une température maximale de "tombée" d'environ 165°C.

On récupère le mélange ainsi obtenu, on le refroidit puis on ajoute le système de vulcanisation (soufre et accélérateur sulfénamide) sur un mélangeur externe (homo-finisseur) à 70°C, en mélangeant le tout (phase productive) pendant environ 5 à 6 min. Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

II.2.3.2-Préparation des compositions de caoutchouc T3 et M3 :

Les compositions T3 et M3 contiennent toutes les deux un mélange maître de caoutchouc naturel et de noir de carbone ; elles diffèrent en ce que le SBR dans M3 porte une fonction SiOR (R étant H), ce qui n'est pas le cas du SBR dans T3. Les teneurs en caoutchouc naturel et en SBR seuls (c'est-à-dire pas sous la forme de mélange maître) et en mélanges maîtres dans T3 et M3 sont indiquées en pce ci-après.

| Composition | T3 | M3 |
|---|---|---|
| NR (1) | 15 | 15 |
| SBR1 (2) | 45 | - |
| SBR2 (3) | - | 45 |
| MB-NR (4) | 60 | 60 |
| (1) caoutchouc naturel ; (2) SBR avec 26% de styrène et 24% de motif 1,2 de la partie butadiénique ; (3) SBR avec 26% de motif styrène et 24% de motif 1,2 de la partie butadiénique, dont plus de 70% des chaînes portent une fonction silanol en extrémité de la chaîne élastomère ; (4) mélange maître mentionné au paragraphe 11.2.1 | | |

On procède de manière analogue à la préparation de T1 et T1-F à la différence près qu'on introduit le caoutchouc naturel et le noir de carbone ensemble sous la forme du mélange maître MB-NR décrit dans le paragraphe 11.2.1.

II.2.3.3-Préparation des compositions de caoutchouc T2 et M2 :

Les compositions T2 et M2 contiennent toutes les deux un mélange maître de caoutchouc naturel et de noir de carbone (MB-NR) et un mélange maître de SBR et de silice ; elles diffèrent en ce que le SBR dans M2 porte une fonction SiOR (R étant H), ce qui n'est pas le cas du SBR dans T2. Les teneurs en caoutchouc naturel seul et en mélanges maîtres dans T2 et M2 sont indiquées en pce ci-après.

| Composition | T2 | M2 |
|---|---|---|
| NR (1) | 15 | 15 |
| MB-NR (4) | 60 | 60 |

(suite)

| Composition | T2 | M2 |
|---|---|---|
| MB-SBR1 (5) | 72 | |
| MB-SBR2 (6) | - | 72 |
| (1) caoutchouc naturel ; (4) mélange maître mentionné au paragraphe II.2.1; (5) et (6) mélanges maîtres mentionnés au paragraphe 11.2.2. | | |

On procède de manière analogue à la préparation de T3 et M3 à la différence près qu'on introduit le SBR, la silice, le silane et la DPG ensemble sous la forme du mélange maître MB-SBR1 (pour T2) ou MB-SBR2 (pour M2).

**II.3-Résultats** :

Les propriétés des compositions de caoutchouc préparées figurent dans le tableau 1. Les compositions de caoutchouc T1, T2 et T3 sont non conformes à l'invention pour au moins la raison suivante : elles ne contiennent pas d'élastomère diénique fonctionnel portant une fonction SiOR.

La composition de caoutchouc T1-F comprenant un élastomère diénique fonctionnel portant une fonction silanol n'est pas conforme à l'invention, puisque la note Z n'est pas supérieure à 80.

Les compositions M2 et M3 sont conformes à l'invention : l'élastomère diénique porte une fonction silanol et la note Z est supérieure à 80.

Tableau 1

| Composition | T1 | T2 | T3 | T1-F | M2 | M3 |
|---|---|---|---|---|---|---|
| Note Z | 74 | 86 | 84 | 54 | 86 | 83 |
| Energie rupture 60°C (MJ) | 104 | 98 | 85 | 61 | 94 | 84 |
| Tan$\delta$ (max) 100°C | 0.078 | 0.079 | 0.086 | 0.066 | 0.063 | 0.073 |

Il est observé que les compositions de caoutchouc M2 et M3 conformes à l'invention présentent le meilleur compromis de propriétés d'hystérèse et d'énergie rupture.

Les compositions confectionnées à partir d'un mélange maître de caoutchouc naturel et de noir de carbone présentent toutes une bonne dispersion du noir de carbone, puisque les notes Z correspondantes sont supérieures à 80.

Bien que la composition T1-F soit la composition la moins hystérétique (tan$\delta$ d'au moins 0.066), c'est aussi celle qui présente les moins bonnes propriétés rupture (énergie rupture étant seulement de 61 J). Les compositions T1, T2 et T3 pour lesquelles l'énergie varie de 85 à 104 J sont parmi celles qui présentent les meilleures propriétés rupture, mais elles sont aussi les plus hystérétiques (tan$\delta$ d'au moins 0.079). L'amélioration du compromis constatée avec les compositions M2 et M3 est bien due à la coexistence dans la composition de caoutchouc d'un élastomère diénique portant une fonction SiOR et d'une note Z supérieure à 80. Effectivement, on n'observe pas d'amélioration du compromis dans le cas des compositions T2 et T3 ayant une note Z supérieure à 80 et dépourvues d'élastomère diénique portant une fonction SiOR. Bien au contraire, on observe pour ces compositions T2 et T3 non seulement une diminution des propriétés rupture, mais aussi une augmentation de l'hystérèse. En effet les valeurs d'énergie rupture pour T2 et T3 sont respectivement de 98 et 85 contre 104 pour T1, alors que les valeurs de tan$\delta$ sont de 0.079 pour T2 et 0.086 pour T3 contre 0.078 pour T1. Une bonne dispersion du noir de carbone, en l'absence d'élastomère diénique portant une fonction SiOR, dans une composition de caoutchouc renforcée par une silice et un noir de carbone, est insuffisante pour améliorer le compromis.

En résumé, il a été découvert de façon surprenante qu'une composition de caoutchouc renforcée par une silice et un noir de carbone avec une note Z supérieure à 80 à base de caoutchouc naturel et d'un élastomère diénique portant une fonction SiOR permettait d'obtenir le meilleur compromis entre les propriétés d'hystérèse et les propriétés rupture.

## Revendications

1. Composition de caoutchouc à base au moins d'une matrice élastomère comprenant du caoutchouc naturel et un élastomère diénique fonctionnel, d'une charge renforçante comprenant un noir de carbone et une silice, d'un agent de couplage pour lier la silice à la matrice élastomère et d'un système de réticulation,

l'élastomère diénique fonctionnel étant un élastomère diénique portant une fonction SiOR, R étant l'hydrogène ou un groupe carboné,
le noir de carbone ayant une surface spécifique BET supérieure à 130m$^2$/g,
la dispersion du noir de carbone dans la matrice élastomère ayant une note Z, telle que définie dans la description, supérieure à 80.

**2.** Composition selon la revendication 1 dans laquelle les taux de noir de carbone et de silice sont compris respectivement entre 5 et 25pce et entre 10 et 30 pce.

**3.** Composition selon l'une quelconque des revendications 1 à 2 dans laquelle le taux de charge renforçante est compris entre 30 et 55 pce.

**4.** Composition selon l'une quelconque des revendications 1 à 3 dans laquelle l'élastomère diénique est un copolymère de styrène et de butadiène.

**5.** Composition selon l'une quelconque des revendications 1 à 4 dans laquelle l'élastomère diénique fonctionnel porte une fonction silanol, de préférence en bout de chaîne, ou SiOR avec R méthyle ou éthyle.

**6.** Composition de caoutchouc selon l'une quelconque des revendications 1 à 5 dans laquelle le taux de caoutchouc naturel est de 55 à 85 pce et le taux élastomère diénique fonctionnel de 15 à 45 pce.

**7.** Composition selon l'une quelconque des revendications 1 à 6 dans laquelle le système de réticulation est un système de vulcanisation.

**8.** Composition selon l'une quelconque des revendications 1 à 7 qui comprend en outre un agent de recouvrement de la silice, de préférence entre 0 et 5 pce.

**9.** Procédé de préparation d'une composition de caoutchouc définie selon l'une quelconque des revendications 1 à 8 qui comprend les étapes suivantes :

a. On prépare un premier mélange maître comprenant le caoutchouc naturel et le noir de carbone dispersé avec une note Z supérieure ou égale à 90,
b. On ajoute la silice et l'élastomère diénique fonctionnel au premier mélange maître
c. On mélange l'ensemble par un malaxage thermomécanique.

**10.** Procédé selon la revendication 9 dans lequel on ajoute la silice et l'élastomère diénique fonctionnel au premier mélange maître sous la forme d'un deuxième mélange maître.

**11.** Procédé selon l'une quelconque des revendications 9 à 10 dans lequel on prépare le premier mélange maître par mélangeage en phase liquide à partir d'un latex de caoutchouc naturel et d'une dispersion aqueuse de noir de carbone.

**12.** Procédé selon la revendication 11 dans lequel on prépare le premier mélange maître selon les étapes suivantes :

a. On alimente avec un premier flux continu d'un latex de caoutchouc naturel une zone de mélange d'un réacteur de coagulation définissant une zone allongée de coagulation s'étendant entre la zone de mélange et une sortie,
b. On alimente la zone de mélange du réacteur de coagulation avec un deuxième flux continu d'un fluide comprenant le noir de carbone sous pression pour former un mélange avec le latex de caoutchouc naturel en mélangeant le premier flux et le deuxième flux dans la zone de mélange de manière suffisamment énergique pour coaguler le latex de caoutchouc naturel avec le noir de carbone avant la sortie, ledit mélange s'écoulant comme un flux continu vers la zone de sortie et ladite charge étant susceptible de coaguler le latex d'élastomère,
c. On récupère à la sortie du réacteur le coagulum obtenu précédemment sous forme d'un flux continu et le sécher afin de récupérer le mélange maître.

**13.** Procédé selon l'une quelconque des revendications 9 à 12 qui comprend en outre les étapes suivantes :

- ajouter au cours d'une première étape dite non productive au premier mélange maître l'élastomère diénique fonctionnel et la silice en malaxant thermomécaniquement jusqu'à atteindre une température maximale comprise

entre 130 et 200°C,
- refroidir l'ensemble à une température inférieure à 100°C,
- incorporer ensuite un système de réticulation,
- malaxer le tout jusqu'à une température maximale inférieure à 120°C.

**14.** Bande de roulement pour pneumatique qui comprend une composition de caoutchouc définie selon l'une quelconque des revendications 1 à 8 ou susceptible d'être obtenue par le procédé défini selon l'une quelconque des revendications 9 à 13.

**15.** Pneumatique qui comprend une composition de caoutchouc définie selon l'une quelconque des revendications 1 à 8 ou susceptible d'être obtenue par le procédé défini selon l'une quelconque des revendications 9 à 13, laquelle composition est préférentiellement dans sa bande de roulement.

## Patentansprüche

**1.** Kautschukzusammensetzung, mindestens basierend auf einer Elastomermatrix, die einen Naturkautschuk und ein funktionelles Dienelastomer umfasst, einem verstärkenden Füllstoff, der einen Ruß und eine Kieselsäure umfasst, einem Kupplungsmittel zum Binden der Kieselsäure an die Elastomermatrix und einem Vernetzungssystem,
wobei es sich bei dem funktionellen Dienelastomer um ein Dienelastomer mit einer SiOR-Funktion handelt, wobei R für Wasserstoff oder eine auf Kohlenstoff basierende Gruppe steht,
wobei der Ruß eine spezifische BET-Oberfläche von mehr als 130 $m^2/g$ aufweist,
wobei die Dispersion des Rußes in der Elastomermatrix einen wie in der Beschreibung definierten Z-Wert von mehr als 80 aufweist.

**2.** Zusammensetzung nach Anspruch 1, wobei die Gehalte an Ruß und Kieselsäure zwischen 5 und 25 phe bzw. zwischen 10 und 30 phe liegen.

**3.** Zusammensetzung nach einem der Ansprüche 1 bis 2, wobei der Gehalt an verstärkenden Füllstoff zwischen 30 und 55 phe liegt.

**4.** Zusammensetzung nach einem der Ansprüche 1 bis 3, wobei es sich bei dem Dienelastomer um ein Copolymer von Styrol und Butadien handelt.

**5.** Zusammensetzung nach einem der Ansprüche 1 bis 4, wobei das funktionelle Dienelastomer eine Silanolfunktion, vorzugsweise am Kettenende, oder eine SiOR-Funktion trägt, wobei R für Methyl oder Ethyl steht.

**6.** Kautschukzusammensetzung nach einem der Ansprüche 1 bis 5, wobei der Gehalt an Naturkautschuk 55 bis 85 phe beträgt und der Gehalt an funktionellem Dienelastomer 15 bis 45 phe beträgt.

**7.** Zusammensetzung nach einem der Ansprüche 1 bis 6, wobei es sich bei dem Vernetzungssystem um ein Vulkanisationssystem handelt.

**8.** Zusammensetzung nach einem der Ansprüche 1 bis 7, die außerdem ein Mittel zur Beschichtung der Kieselsäure, vorzugsweise zwischen 0 und 5 phe, umfasst.

**9.** Verfahren zur Herstellung einer Kautschukzusammensetzung gemäß einem der Ansprüche 1 bis 8, das folgende Schritte umfasst:

a. man stellt einen ersten Masterbatch her, der den Naturkautschuk und den dispergierten Ruß mit einem Z-Wert größer oder gleich 90 umfasst,
b. man gibt die Kieselsäure und das funktionelle Dienelastomer zu dem ersten Masterbatch,
c. man mischt das Ganze durch thermomechanisches Kneten.

**10.** Verfahren nach Anspruch 9, bei dem man die Kieselsäure und das funktionelle Dienelastomer in Form eines zweiten Masterbatch zu dem ersten Masterbatch gibt.

**11.** Verfahren nach einem der Ansprüche 9 bis 10, bei dem man den ersten Masterbatch durch Mischen in der Flüssigphase ausgehend von einem Naturkautschuk-Latex und einer wässrigen Rußdispersion herstellt.

**12.** Verfahren nach Anspruch 11, bei dem man den ersten Masterbatch gemäß den folgenden Schritten herstellt:

a. man trägt einen ersten kontinuierlichen Strom eines Naturkautschuk-Latex in eine Mischzone eines Koagulationsreaktors ein, welcher eine langgestreckte Koagulationszone definiert, die sich zwischen der Mischzone und einem Ausgang erstreckt,
b. man trägt in die Mischzone des Koagulationsreaktors einen zweiten kontinuierlichen Strom eines Fluids, das Ruß umfasst, unter Druck ein, um durch Mischen des ersten Stroms und des zweiten Stroms in der Mischzone mit ausreichender Energie zur Koagulation des Naturkautschuk-Latex mit dem Ruß vor dem Ausgang eine Mischung mit dem Naturkautschuk-Latex zu bilden, wobei die Mischung als kontinuierlicher Strom zur Ausgangszone Strom und der Füllstoff dazu in der Lage ist, den Elastomerlatex zu koagulieren,
c. man gewinnt das oben erhaltene Koagulat am Ausgang des Reaktors in Form eines kontinuierlichen Stroms und trocknet es dann, um den Masterbatch zu gewinnen.

**13.** Verfahren nach einem der Ansprüche 9 bis 12, das außerdem die folgenden Schritte umfasst:

- im Lauf eines ersten Schritts, der als nichtproduktiv bezeichnet wird, Zugeben des funktionellen Dienelastomers und der Kieselsäure zu dem ersten Masterbatch durch thermomechanisches Kneten bis zum Erreichen einer Maximaltemperatur zwischen 130 und 200 °C
- Abkühlen des Ganzen auf eine Temperatur von weniger als 100 °C,
- anschließendes Einarbeiten eines Vernetzungssystems,
- Kneten des Ganzen bis zu einer Maximaltemperatur von weniger als 120 °C.

**14.** Reifenlauffläche, die eine Kautschukzusammensetzung gemäß einem der Ansprüche 1 bis 8 oder eine durch das Verfahren gemäß einem der Ansprüche 9 bis 13 erhältliche Kautschukzusammensetzung umfasst.

**15.** Reifen, der eine Kautschukzusammensetzung gemäß einem der Ansprüche 1 bis 8 oder eine durch das Verfahren gemäß einem der Ansprüche 9 bis 13 erhältliche Kautschukzusammensetzung umfasst, wobei die Zusammensetzung vorzugsweise in seiner Lauffläche vorliegt.

## Claims

**1.** Rubber composition based at least on an elastomer matrix comprising natural rubber and a functional diene elastomer, on a reinforcing filler comprising a carbon black and a silica, on a coupling agent for binding the silica to the elastomer matrix and on a crosslinking system,
the functional diene elastomer being a diene elastomer that bears an SiOR function, R being hydrogen or a carbon-based group,
the carbon black having a BET specific surface area of greater than 130 $m^2/g$,
the dispersion of the carbon black in the elastomer matrix having a Z value of greater than 80, the Z value being as described in the specification.

**2.** Composition according to Claim 1, in which the contents of carbon black and of silica are respectively between 5 and 25 phr and between 10 and 30 phr.

**3.** Composition according to any one of Claims 1 to 2, in which the content of reinforcing filler is between 30 and 55 phr.

**4.** Composition according to any one of Claims 1 to 3, in which the diene elastomer is a styrene/butadiene copolymer.

**5.** Composition according to any one of Claims 1 to 4, in which the functional diene elastomer bears a silanol function, preferably at the chain end, or SiOR function with R being methyl or ethyl.

**6.** Rubber composition according to any one of Claims 1 to 5, in which the content of natural rubber is from 55 to 85 phr and the content of functional diene elastomer is from 15 to 45 phr.

**7.** Composition according to any one of Claims 1 to 6, in which the crosslinking system is a vulcanization system.

8. Composition according to any one of Claims 1 to 7, which additionally comprises an agent for covering the silica, preferably between 0 and 5 phr.

9. Process for preparing a rubber composition defined according to any one of Claims 1 to 8, which comprises the following steps:

a. a first masterbatch comprising the natural rubber and the carbon black dispersed with a Z value greater than or equal to 90 is prepared,
b. the silica and the functional diene elastomer are added to the first masterbatch,
c. the combined mixture is mixed by thermomechanical kneading.

10. Process according to Claim 9, in which the silica and the functional diene elastomer are added to the first masterbatch in the form of a second masterbatch.

11. Process according to any one of Claims 9 to 10, in which the first masterbatch is prepared by liquid-phase mixing starting from a natural rubber latex and an aqueous dispersion of carbon black.

12. Process according to Claim 11, in which the first masterbatch is prepared according to the following steps:

a. a first continuous stream of a natural rubber latex is fed to a mixing zone of a coagulation reactor defining an elongated coagulation zone extending between the mixing zone and an outlet,
b. the mixing zone of the coagulation reactor is fed with a second continuous stream of a fluid comprising carbon black under pressure in order to form a mixture with the natural rubber latex by mixing the first stream and the second stream in the mixing zone sufficiently energetically to coagulate the natural rubber latex with the carbon black prior to the outlet, said mixture flowing as a continuous stream towards the outlet zone and said filler being capable of coagulating the elastomer latex,
c. the coagulum obtained previously is recovered at the outlet of the reactor in the form of a continuous stream and it is dried in order to recover the masterbatch.

13. Process according to any one of Claims 9 to 12, which additionally comprises the following steps:

- adding, during a first "non-productive" stage, to the first masterbatch, the functional diene elastomer and the silica, by kneading thermomechanically until a maximum temperature of between 130°C and 200°C is reached,
- cooling the combined mixture to a temperature below 100°C,
- subsequently incorporating a crosslinking system,
- kneading everything up to a maximum temperature below 120°C.

14. Tyre tread which comprises a rubber composition defined according to any one of Claims 1 to 8 or capable of being obtained by the process defined according to any one of Claims 9 to 13.

15. Tyre which comprises a rubber composition defined according to any one of Claims 1 to 8 or capable of being obtained by the process defined according to any one of Claims 9 to 13, which composition is preferentially in its tread.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 0778311 B1
- WO 2008141702 A
- WO 2006050486 A
- EP 0877047 B1
- EP 1400559 B1
- JP 63215701 A
- JP 62227908 A
- US 5409969 A
- EP 1457501 B1
- WO 2006076629 A
- EP 0341496 B1
- WO 2009133068 A
- WO 2004111094 A
- EP 0590490 B1
- EP 0626278 B1
- US 5508333 A
- EP 0890607 B1
- EP 0692492 B1
- EP 1000970 B1
- WO 03016387 A
- WO 03002648 A
- US 2005016651 A
- WO 03002649 A
- US 2005016650 A
- WO 0230939 A
- US 6774255 B
- WO 0231041 A
- US 2004051210 A
- WO 2006125532 A
- WO 2006125533 A
- WO 2006125534 A
- US 6048923 A


### Littérature non-brevet citée dans la description


- *The Journal of the American Chemical Society,* Février 1938, vol. 60, 309
- **S. OTTO et al.** *Kautschuk Gummi Kunststoffe,* Juillet 2005
- Latex concentrates : properties and composition. **K.F. GASELEY ; A.D.T. GORDON ; T.D. PENDLE.** Naturel Rubber Science and Technology. Oxford University Press, 1988